(19) Europäisches Patentamt
European Patent Office
Office européen des brevets

(11) **EP 0 736 553 B1**

(12) **EUROPÄISCHE PATENTSCHRIFT**

(45) Veröffentlichungstag und Bekanntmachung des Hinweises auf die Patenterteilung:
**20.06.2001 Patentblatt 2001/25**

(51) Int Cl.[7]: **C08F 222/06**, C08F 222/40, C08F 222/20, C08F 216/14, C04B 24/26

(21) Anmeldenummer: **96105446.7**

(22) Anmeldetag: **04.04.1996**

(54) **Copolymere auf Basis von Oxyalkylenglykol-Alkenylethern und ungesättigten Dicarbonsäure-Derivaten**

Copolymers based on oxyalkyleneglycol alkenyl ethers and derivatives of unsaturated dicarboxylic acids

Copolymères à base d'oxyalkylèneglykol et dérivés d'acides dicarboxyliques insaturés

(84) Benannte Vertragsstaaten:
**AT BE CH DE DK ES FI FR GB IT LI NL SE**
Benannte Erstreckungsstaaten:
**SI**

(30) Priorität: **07.04.1995 DE 19513126**

(43) Veröffentlichungstag der Anmeldung:
**09.10.1996 Patentblatt 1996/41**

(73) Patentinhaber: **SKW Bauchemie GmbH**
**83308 Trostberg (DE)**

(72) Erfinder:
- **ALbrecht, Gerhard, Dr.**
  **83308 Trostberg (DE)**
- **Weichmann, Josef, Dr.**
  **84568 Pleiskirchen (DE)**
- **Penkner, Johann**
  **83342 Tacherting (DE)**
- **Kern, Alfred, Dr.**
  **84558 Kirchweidach (DE)**

(74) Vertreter: **Böhm, Brigitte, Dipl.-Chem. Dr. et al**
**Weickmann & Weickmann**
**Patentanwälte**
**Kopernikusstrasse 9**
**81679 Munich (DE)**

(56) Entgegenhaltungen:
**EP-A- 0 560 602**
**EP-A- 0 610 699**
**DE-A- 4 034 708**
**DE-A- 4 142 388**
**US-A- 5 162 402**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Copolymere auf Basis von Oxyalkylenglykol-Alkenylethern und ungesättigten Dicarbonsäure-Derivaten, Verfahren zu deren Herstellung sowie die Verwendung dieser Copolymere als Zusatzmittel für hydraulische Bindemittel, insbesondere Zement, zur Verbesserung der Eigenschaften der daraus hergestellten Baustoffe während des Verarbeitungs- bzw. Erhärtungsprozesses.

Es ist bekannt, daß man wäßrigen Aufschlämmungen von pulverförmigen anorganischen oder organischen Substanzen, wie Tonen, Porzellanschlicker, Silikatmehl, Kreide, Ruß, Gesteinsmehl, Pigmenten, Talkum, Kunststoffpulvern und hydraulischen Bindemitteln zur Verbesserung ihrer Verarbeitbarkeit, d. h. Knetbarkeit, Streichfähigkeit, Spritzbarkeit, Pumpbarkeit oder Fließfähigkeit, oft Zusatzmittel in Form von Dispergiermitteln zusetzt. Diese in der Regel ionische Gruppen enthaltenden Zusatzmittel sind in der Lage, Feststoffagglomerate aufzubrechen, die gebildeten Teilchen zu dispergieren und auf diese Weise die Verarbeitbarkeit speziell von hochkonzentrierten Suspensionen zu verbessern. Dieser Effekt wird gezielt auch bei der Herstellung von Baustoffmischungen, die hydraulische Bindemittel wie Zement, Kalk, Gips oder Anhydrit enthalten, ausgenutzt.

Um diese Baustoffmischungen auf der Basis der genannten Bindemittel in eine gebrauchsfertige, verarbeitbare Form zu überführen, ist in der Regel wesentlich mehr Anmachwasser erforderlich, als für den nachfolgenden Hydratations- bzw. Erhärtungsprozeß notwendig wäre. Der durch das überschüssige, später verdunstende Wasser gebildete Hohlraumanteil im Baukörper führt zu signifikant verschlechterten mechanischen Festigkeiten und Beständigkeiten.

Um diesen überschüssigen Wasseranteil bei einer vorgegebenen Verarbeitungskonsistenz zu reduzieren und/oder die Verarbeitbarkeit bei einem vorgegebenen Wasser/Bindemittel-Verhältnis zu verbessern, werden Zusatzmittel eingesetzt, die im allgemeinen als Wasserreduktions- oder Fließmittel bezeichnet werden. Als derartige Mittel sind vor allem Polykondensationsprodukte auf Basis von Naphthalin- oder Alkylnaphthalinsulfonsäuren (vgl. EP-A 214 412) bzw. Sulfonsäuregruppen enthaltende Melamin--Formaldehydharze (vgl. DE-PS 16 71 017) bekannt.

Nachteilig bei diesen Zusatzmitteln ist die Tatsache, daß ihre ausgezeichnete verflüssigende Wirkung insbesondere im Betonbau nur über eine kurze Zeitspanne bestehen bleibt. Der Abfall der Verarbeitbarkeit von Betonmischungen ("Slump-loss") in kurzer Zeit kann insbesondere dort zu Problemen führen, wo zwischen Herstellung und Einbau des Frischbetons, bspw. bedingt durch lange Förder- und Transportwege, ein großer Zeitraum liegt.

Ein zusätzliches Problem ergibt sich bei der Anwendung derartiger Fließmittel im Bergbau und im Innenbereich (Gipskarton-plattentrocknung, Betonfertigteilherstellung), wo es zur Freisetzung des in den Produkten herstellungsbedingt enthaltenden toxischen Formaldehyds und damit zu beträchtlichen arbeitshygienischen Belastungen kommen kann. Aus diesem Grund wurde auch schon versucht, stattdessen formaldehydfreie Betonfließmittel aus Maleinsäuremonoestern und Styrol, bspw. entsprechend der EP-A 306 449, zu entwickeln. Die Fließwirkung von Betonmischungen kann mit Hilfe dieser Zusatzmittel über einen ausreichend langen Zeitraum aufrecht erhalten werden, jedoch geht die ursprünglich vorhandene, sehr hohe Dispergierwirkung nach Lagerung der wäßrigen Zubereitung des Fließmittels, bedingt durch die Hydrolyse des polymeren Esters, sehr schnell verloren.

Dieses Problem tritt bei den Fließmitteln aus Alkylpolyethylenglykolallylethern und Maleinsäureanhydrid entsprechend der EP-A 373 621 nicht auf. Jedoch handelt es sich bei diesen Produkten, ähnlich wie bei den zuvor beschriebenen, um oberflächenaktive Verbindungen, die unerwünscht hohe Anteile von Luftporen in die Betonmischung einführen, woraus Einbußen bei der Festigkeit und Beständigkeit des erhärteten Baustoffes resultieren.

EP-A-0 560 602 offenbart eine Betonzusammensetzung mit hoher Fließfähigkeit, in der ein copolymeres Material gemäß einer der Formeln $R^{10(AO)n}R^2$ (I), $R^1O(AO)_mR^2$ (II) und $R^1O(AO)_pR^2$ (III) plus Maleinsäureanhydrid enthalten ist. $R^1$ und $R^2$ stellen jeweils eine $C_{2-5}$-Alkenylgruppe und $C_{1-4}$-Alkylgruppe dar, AO stellt eine Oxyalkylengruppe mit 2 bis 18 C-Atomen dar und m, n und p sind durchschnittliche Adduktmolzahlen von insgesamt 1 bis 150.

In DE-A-41 42 388 sind Copolymere von Styrol und Maleinsäurehalbestern als Zementverflüssiger offenbart, die als eines der Bauelemente einen Maleinsäurehalbester enthalten, an den über eine Esterbindung hydrophobe Gruppen, wie etwa Polyalkylenglykol oder Polysiloxan, gebunden sind. In dieser Anmeldung sind wiederum Verbindungen offenbart, die aufgrund der Reaktivität der Estergruppe eine geringe Hydrolysestabilität aufweisen und zur Verseifung und damit zur Schaumbildung neigen.

Aus diesem Grund ist es erforderlich, den wäßrigen Lösungen dieser Polymerverbindungen Antischaummittel, wie z.B. Tributylphosphat, Silikonderivate und verschiedene wasserunlösliche Alkohole im Konzentrationsbereich von 0,1 bis 2 Gew.-% bezogen auf den Feststoffgehalt, zuzusetzen. Das Einmischen dieser Komponenten und die Aufrechterhaltung einer lagerstabilen homogenen Form der entsprechenden Formulierungen gestaltet sich auch selbst dann recht schwierig, wenn diese Antischaummittel in Form von Emulsionen zugesetzt werden.

Der vorliegenden Erfindung lag daher die Aufgabe zugrunde, neue Polymerverbindungen bereitzustellen, welche die genannten Nachteile entsprechend dem Stand der Technik nicht aufweisen, sondern eine ausgezeichnete und lang anhaltende verflüssigende Wirkung besitzen, eine ausreichende Lagerstabilität aufweisen und außerdem keine Luftporen einführende Eigenschaften mit sich bringen, so daß auf den Einsatz von Entschäumern bei der Anwendung der entsprechenden Produkte verzichtet werden kann.

Diese Aufgabe wurde erfindungsgemäß durch die Copolymere entsprechend Anspruch 1 gelöst. Es hat sich nämlich überraschenderweise gezeigt, daß die erfindungsgemäßen Copolymere auf Basis von Oxyalkylenglykol-Alkenylethern und ungesättigten Dicarbonsäure-Derivaten eine ausgezeichnete verflüssigende Wirkung besitzen, die auch über einen ausreichend langen Zeitraum aufrecht erhalten werden kann, ohne daß hierbei die anwendungstechnischen Eigenschaften der entsprechend gehärteten Baustoffe oder Baustoffteile, wie Festigkeit und Beständigkeit, negativ beeinflußt werden. Außerdem weisen die erfindungsgemäßen Copolymere eine gute Lagerbeständigkeit auf, was ebenfalls nicht vorhersehbar war.

Die Copolymer-Verbindungen entsprechend der vorliegenden Erfindung bestehen aus mindestens drei Baugruppen a), b) und c). Die erste Baugruppe a) stellt ein ungesättigtes Dicarbonsäure-Derivat entsprechend der Formel Ia oder Ib dar.

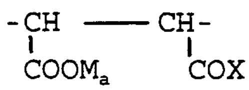

Ia

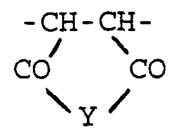

Ib

Beim Dicarbonsäure-Derivat entsprechend Formel Ia bedeutet M = Wasserstoff, ein ein- oder zweiwertiges Metallkation, Ammoniumion, ein organischer Aminrest, sowie a = 1, oder für den Fall, daß es sich bei M um ein zweiwertiges Kation handelt, ½. Es ergibt sich dann zusammen mit einer ebenfalls $M_a$ mit a = ½ enthaltenden Gruppierung eine Verbrückung über M, welches als $M_a$ mit a = ½ nur theoretisch existiert.

Als ein- oder zweiwertiges Metallkation finden vorzugsweise Natrium-, Kalium-, Calcium- oder Magnesiumionen Verwendung. Als organische Aminreste werden vorzugsweise substituierte Ammoniumgruppen eingesetzt, die sich ableiten von primären, sekundären oder tertiären $C_1$- bis $C_{20}$-Alkylaminen, $C_1$- bis $C_{20}$-Alkanolaminen, $C_5$- bis $C_8$-Cycloalkylaminen und $C_6$- bis $C_{14}$-Arylaminen. Beispiele für entsprechende Amine sind Methylamin, Dimethylamin, Trimethylamin, Ethanolamin, Diethanolamin, Triethanolamin, Cyclohexylamin, Dicyclohexylamin, Phenylamin, Diphenylamin in der protonierten (Ammonium)-Form. Außerdem bedeutet X ebenfalls $-OM_a$ oder $-O-(C_mH_{2m}O)_n-R^1$ wobei $R^1$ = H, ein aliphatischer Kohlenwasserstoffrest mit 1 bis 20 C-Atomen, ein cycloaliphatischer Kohlenwasserstoffrest mit 5 bis 8 C-Atomen, ein Arylrest mit 6 bis 14 C-Atomen, der ggf. noch substituiert sein kann, m = 2 bis 4 sowie n = 0 bis 100 sein kann. Die aliphatischen Kohlenwasserstoffreste können hierbei linear oder verzweigt sowie gesättigt oder auch ungesättigt sein.

Als bevorzugte Cycloalkylreste sind Cyclopentyl- oder Cyclohexylreste, als bevorzugte Arylreste Phenyl- oder Naphthylreste anzusehen, die insbesondere noch durch Hydroxyl-, Carboxyl- oder Sulfonsäuregruppen substituiert sein können. Alternativ hierzu kann X noch $-NHR^2$ und/oder $-NR^2_2$ bedeuten, was den mono- oder disubstituierten Monoamiden der entsprechenden ungesättigten Dicarbonsäure entspricht, wobei $R^2$ wiederum mit $R^1$ identisch sein kann oder stattdessen $-CO-NH_2$ bedeuten kann.

Anstelle des Dicarbonsäure-Derivates entsprechend Formel Ia kann die Baugruppe a) (Dicarbonsäure-Derivat) auch in cyclischer Form entsprechend der Formel Ib vorliegen, wobei Y = O (= Säureanhydrid) oder $NR^2$ (Säureimid) darstellen kann und $R^2$ die oben bezeichnete Bedeutung besitzt.

In der zweiten Baugruppe entsprechend der Formel II,

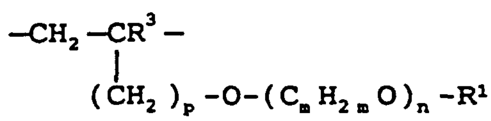

II

die sich von den Oxyalkylenglykol-Alkenylethern ableitet, bedeuten $R^3$ wiederum Wasserstoff oder ein aliphatischer Kohlenwasserstoffrest mit 1 bis 5 C-Atomen (der ebenfalls linear oder verzweigt bzw. auch ungesättigt sein kann). p kann Werte zwischen 0 und 3 annehmen und $R^1$, m und n besitzen die oben genannte Bedeutung. Gemäß einer bevorzugten Ausführungsform bedeuten in Formel II p = 0 und m = 2 oder 3, so daß es sich um Baugruppen handelt, die sich vom Polyethylenoxid- oder Polypropylenoxid-Vinylether ableiten.

Die dritte Baugruppe c) entspricht der Formel IIIa oder IIIb

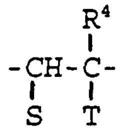

IIIa

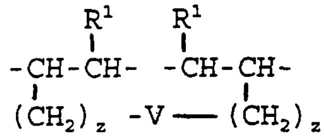

IIIb

In Formel IIIa kann $R^4$ = H oder $CH_3$ sein, je nachdem ob es sich um Acryl- oder Methacrylsäure-Derivate handelt. S kann hierbei -H, $-COOM_a$ oder $-COOR^5$ bedeuten, wobei a und M die oben erwähnte Bedeutung besitzen und $R^5$ ein aliphatischer Kohlenwasserstoffrest mit 3 bis 20 C-Atomen, ein cycloaliphatischer Kohlenwasserstoffrest mit 5 bis 8 C-Atomen oder ein Arylrest mit 6 bis 14 C-Atomen sein kann. Der aliphatische Kohlenwasserstoffrest kann ebenfalls linear oder verzweigt, gesättigt oder ungesättigt sein. Die bevorzugten cycloaliphatischen Kohlenwasserstoffreste sind wiederum Cyclopentyl- oder Cyclohexylreste und die bevorzugten Arylreste Phenyl- oder Naphthylreste. Im Falle von T = $-COOR^5$ ist S = $COOM_a$ oder $-COOR^5$. Für den Fall, daß T und S = $COOR^5$ sind, leiten sich die entsprechenden Baugruppen von den Dicarbonsäureestern ab.

Neben diesen Esterstruktureinheiten können die Baugruppen c) noch andere hydrophobe Strukturelemente besitzen. Hierzu gehören die Polypropylenoxid- bzw. Polypropylenoxid-Polyethylenoxid-Derivate mit

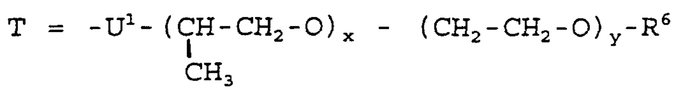

x nimmt hierbei einen Wert von 1 bis 150 und y von 0 bis 15 an. Die Polypropylenoxid(-Polyethylenoxid-)-Derivate können hierbei über eine Gruppierung $U^1$ mit dem Ethylrest der Baugruppe c) entsprechend Formel IIIa verknüpft sein, wobei $U^1$ = -CO-NH-, -O- oder $-CH_2-O-$ sein kann. Hierbei handelt es sich um die entsprechenden Amid-, Vinyl- oder Allylether der Baugruppen entsprechend Formel IIIa. $R^6$ kann hierbei wiederum $R^1$ (Bedeutung von $R^1$ siehe oben) oder

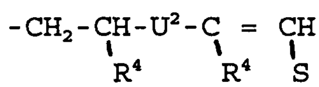

sein, wobei $U^2$ = -NH-CO-,
-O- oder $-OCH_2-$ bedeuten kann und S die oben beschriebene Bedeutung besitzt. Diese Verbindungen stellen Polypropylenoxid(-Polyethylenoxid-)-Derivate von den bifunktionellen Alkenylverbindungen entsprechend Formel IIIa dar.

Als weiteres hydrophobes Strukturelement können die Verbindungen entsprechend Formel IIIa Polydimethylsiloxan-Gruppen enthalten, was im Formelschema IIIa T = $-W-R^7$ entspricht.

W bedeutet hierbei

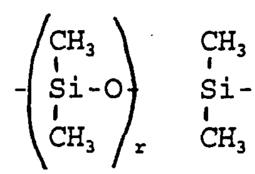

(nachfolgend Polydimethylsiloxan-Gruppierung genannt), $R^7$ kann $R^1$ sein und r kann hierbei Werte von 2 bis 100 annehmen.

Die Polydimethylsiloxan-Gruppierung W kann nicht nur direkt an den Ethylenrest gemäß Formel IIIa gebunden sein, sondern auch noch über die Gruppierungen

$$-CO-\left[NH-(CH_2)_3\right]_s-W-R^7$$

oder $-CO-O-(CH_2)_z-W-R^7$, wobei $R^7$ vorzugsweise = $R^1$ bedeutet und s = 1 oder 2 und z = 0 bis 4 sein können, mit der Maßgabe, daß $z \neq 0$ ist, wenn T = $-CO-O-(CH_2)_z-W-R^7$.

$R^7$ kann außerdem noch

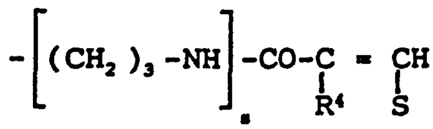

oder

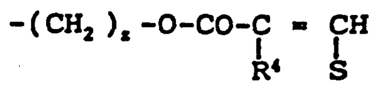

sein.

Hierbei handelt es sich um die entsprechenden difunktionellen Ethylenverbindungen entsprechend der Formel IIIa, die über die entsprechenden Amid- oder Estergruppierungen miteinander verknüpft sind und wobei nur eine Ethylengruppe copolymerisiert wurde.

Ähnlich verhält es sich auch mit den Verbindungen gemäß Formel IIIa mit T = $-(CH_2)_z-V-(CH_2)_z-CH=CH-R^1$, wobei z = 0 bis 4, V entweder ein Polydimethylsiloxan-Rest W oder ein $-O-CO-C_6H_4-CO-O-$Rest sein kann und $R^1$ die oben angegebene Bedeutung besitzt. Diese Verbindungen leiten sich von den entsprechenden Dialkenyl-phenyl-dicarbonsäureestern oder Dialkenyl-polydimethylsiloxan-Derivaten ab.

Es ist im Rahmen der vorliegenden Erfindung auch möglich, daß nicht nur eine, sondern beide Ethylengruppen der difunktionellen Ethylenverbindungen copolymerisiert wurden. Dies entspricht im wesentlichen den Baugruppen entsprechend der Formel IIIb

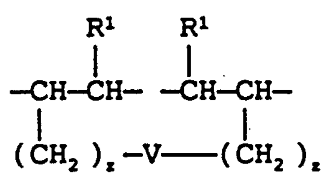

IIIb

wobei $R^1$, V und z die bereits beschriebene Bedeutung besitzen.

Es ist als erfindungswesentlich anzusehen, daß die Copolymere aus 10 bis 90 Mol-% Baugruppen der Formel Ia und/oder Ib, 1 bis 89 Mol-% Baugruppen der Formel II und 0,1 bis 10 Mol-% Baugruppen der Formel IIIa oder IIIb bestehen. Vorzugsweise bestehen diese Copolymere aus 40 bis 55 Mol-% Baugruppen der Formel Ia und/oder Ib, 40 bis 55 Mol-% Baugruppen der Formel II und 1 bis 5 Mol-% Baugruppen der Formel IIIa oder IIIb. Gemäß einer bevorzugten Ausführungsform enthalten die erfindungsgemäßen Copolymere zusätzlich noch bis zu 50 Mol-%, insbesondere bis zu 20 Mol-%, bezogen auf die Summe der Baugruppen a), b) und c), Baugruppen, deren Monomer ein Vinyl-, Acrylsäure- oder Methacrylsäure-Derivat darstellt.

Vorzugsweise leiten sich die monomeren Vinylderivate von einer Verbindung ab, die ausgewählt ist aus der Gruppe Styrol, Ethylen, Propylen, Isobuten oder Vinylacetat. Als bevorzugtes monomeres Acrylsäurederivat leiten sich die zusätzlichen Baugruppen insbesondere von Acrylsäure oder Methylacrylat ab. Als bevorzugtes monomeres Methacrylsäure-Derivat ist Methacrylsäure, Methylmethacrylat und Hydroxyethylmethacrylat anzusehen.

Ein besonderer Vorteil der erfindungsgemäßen Copolymere besteht darin, daß man die molaren Anteile der

Strukturεinheiten a) bis c) derart einstellen kann, daß bei den entsprechenden Copolymeren ein ausgewogenes Verhältnis von polaren zu unpolaren Gruppierungen resultiert, wodurch eine gezielte Kontrolle der oberflächenaktiven Eigenschaften der entsprechenden Produkte möglich ist.

Die Anzahl der sich wiederholenden Strukturelemente ist hierbei nicht eingeschränkt, doch hat es sich als besonders vorteilhaft erwiesen, die Anzahl der Strukturelemente so einzustellen, daß die Copolymere ein mittleres Molekulargewicht von 1000 bis 200000 aufweisen, wobei sich das gewünschte Molekulargewicht in erster Linie nach der Art des anorganischen Bindemittels (Portlandzement, Anhydrit, Gips usw.) und dem Anwendungsgebiet (Fließbeton, Anhydritestrich, Gipskartonplattenerzeugung etc.) richtet.

Die wäßrigen Zubereitungen der erfindungsgemäßen Copolymeren weisen aufgrund des Wechsels von hydrophilen und hydrophoben Gruppen in der makromolekularen Struktur einen Trübungspunkt auf, der bevorzugt zwischen 20 und 80 °C liegt und vorzugsweise durch den Anteil des Strukturelements c) beliebig gesteuert werden kann.

Die Herstellung der erfindungsgemäßen Copolymere kann auf verschiedenen Wegen erfolgen. Wesentlich ist hierbei, daß man 10 bis 90 Mol-% eines ungesättigten Dicarbonsäure-Derivats, 9 bis 89 Mol-% eines Oxyalkylenglykol-Alkenylethers und 0,1 bis 10 Mol-% einer vinylischen Polyalkylenglykol-, Polysiloxan- oder Ester-Verbindung mit Hilfe eines radikalischen Starters polymerisiert. Als ungesättigtes Carbonsäurederivat, welches zu den Baugruppen der Formel Ia bzw. Ib führt, werden vorzugsweise Maleinsäure, Maleinsäuremonoester, Maleinsäuremonoamide, Maleinsäureureide, Maleinsäureimide sowie Maleinsäureanhydrid aber auch Fumarsäure eingesetzt.

Aufgrund ihrer hydrolytischen Stabilität in wäßrigen Zubereitungen werden besonders bevorzugt Copolymere auf Basis von Maleinsäure, Maleinsäuremonoamiden und -ureiden verwendet. Anstelle der Maleinsäure oder Fumarsäure können auch deren ein- oder zweiwertige Metallsalze, vorzugsweise Natrium-, Kalium-, Calcium- oder Magnesiumsalze, deren Ammoniumsalze oder deren Salze mit einem organischen Aminrest verwendet werden. Als Maleinsäuremonoester wird vor allem ein Esterderivat eingesetzt, dessen alkoholische Komponente ein Polyalkylenglykol-Derivat der allgemeinen Formel $HO-(C_mH_{2m}O)_n-R^1$, wobei $R^1$ = H, ein aliphatischer Kohlenwasserstoffrest (linear oder verzweigtkettig bzw. ungesättigt) mit 1 bis 20 C-Atomen, ein cycloaliphatischer Kohlenwasserstoffrest mit 5 bis 8 C-Atomen, ein ggf. substituierter Arylrest mit 6 bis 14 C-Atomen sowie m = 2 bis 4 und n = 0 bis 100 bedeuten.

Die bevorzugten Substituenten am Arylrest sind Hydroxyl-, Carboxyl- oder Sulfonsäuregruppen. Im Falle der Malein- oder Fumarsäuremonoamide sind die Reste $R^2$ der Gruppierung $-NR^2_2$ mit $R^1$ identisch. Die ungesättigten Dicarbonsäure-Derivate werden vorzugsweise in einer Menge von 40 bis 55 Mol-% verwendet.

Die zweite erfindungswesentliche Komponente zur Herstellung der erfindungsgemäßen Copolymeren stellt ein Oxyalkylenglykol-Alkenylether dar, der vorzugsweise in einer Menge von 40 bis 55 Mol-% eingesetzt wird. Bei den bevorzugten Oxyalkylenglykol-Alkenylethern entsprechend der Formel IV

$$CH_2=CR^3-(CH_2)_p-O-(C_mH_{2m}O)_n-R^1 \qquad (IV)$$

bedeuten $R^3$ = H oder ein aliphatischer Kohlenwasserstoffrest mit 1 bis 5 C-Atomen und p = 0 bis 3. $R^1$, m und n besitzen die bereits oben genannte Bedeutung. Als besonders vorteilhaft hat sich hierbei die Verwendung von Polyethylenglykolmonovinylether (p = 0 und m = 2) erwiesen, wobei n vorzugsweise Werte zwischen 2 und 15 besitzt.

Als dritte erfindungswesentliche Komponente zur Einführung der Baugruppen c) wird vorzugsweise 1 bis 5 Mol-% einer vinylischen Polyalkylenglykol-, Polysiloxan- oder Ester-Verbindung eingesetzt. Als bevorzugte vinylische Polyalkylenglykol-Verbindung werden Derivate entsprechend der Formel V verwendet,

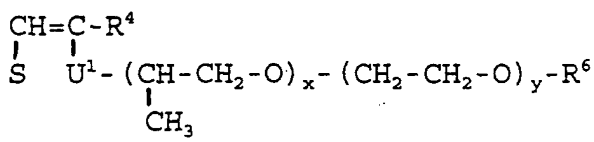

(V)

wobei S vorzugsweise -H oder $-COOM_a$ und $U^1$ = -CO-NH-, -O- oder $-CH_2O-$ sein können, d.h. es handelt sich um die Säureamid-, Vinyl- oder Allylether der entsprechenden Polypropylenglykol- bzw. Polypropylenglykol-Polyethylen-glykol-Derivate. Die Werte für x sind 1 bis 150 und für y = = 0 bis 15. $R^6$ kann entweder wiederum $R^1$ sein oder

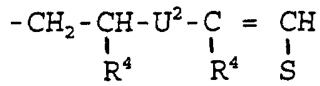

bedeuten, wobei
$U^2$ = -NH-CO-, -O- sowie $-OCH_2-$ und S = $-COOM_a$ und vorzugsweise -H ist.

Im Falle von $R^6 = R^1$ und $R^1$ vorzugsweise H handelt es sich um die Polypropylenglykol(-Polyethylenglykol)-Monamide bzw. Ether der entsprechenden Acryl- (S = H, $R^4$ = H), Methacryl- (S = H, $R^4 = CH_3$) oder Maleinsäure- (S = $COOM_a$, $R^4$ = H) -Derivate. Beispiele für solche Monomere sind Maleinsäure-N- (methylpolypropylenglykol-)monoamid, Maleinsäure-N-(methoxy-polypropylenglykolpolyethylenglykol-)monoamid, Polypropylenglykolvinylether und Polypropylenglykolallylether.

Im Falle von $R^6 \neq R^1$ handelt es sich um bifunktionelle Vinylverbindungen, deren Polypropylenglykol-(Polyethylenglykol-)-Derivate über Amid- oder Ethergruppen (-O- bzw. $-OCH_2-$) miteinander verbunden sind. Beispiele für solche Verbindungen sind Polypropylenglykol-bis-maleinamidsäure, Polypropylenglykoldiacrylamid, Polypropylenglykoldimethacrylamid, Polypropylenglykoldivinylether, Polypropylenglykoldiallylether.

Als bevorzugte vinylische Polysiloxan-Verbindung werden Derivate entsprechend der Formel VI verwendet,

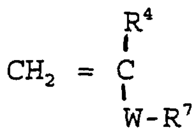

(VI)

wobei $R^4$ = -H und $CH_3$,

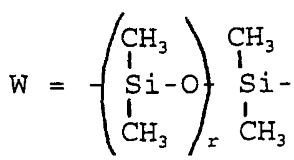

und r = 2 bis 100 und $R^7$ bevorzugt = $R^1$ ist. Beispiele für solche Monomere sind Monovinylpolydimethylsiloxane.

Als weitere vinylische Polysiloxan-Verbindung kommen Derivate entsprechend der Formel VII in Frage,

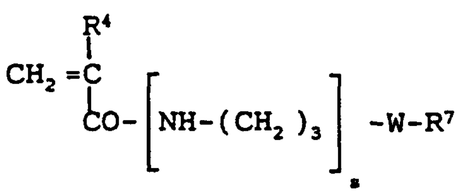

(VII)

wobei s = 1 oder 2 sein kann, $R^4$ und W die oben genannte Bedeutung besitzen und $R^7$ entweder = $R^1$ oder aber

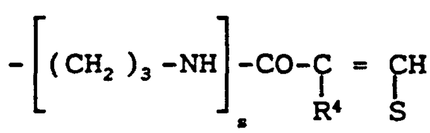

sein kann und S vorzugsweise Wasserstoff darstellt.

Beispiele für solche Monomere mit einer Vinylfunktion ($R^7 = R^1$) sind Polydimethylsiloxanpropylmaleinamidsäure oder Polydimethylsiloxandipropylenaminomaleinamidsäure. Im Falle von $R^7 \neq R^1$ handelt es sich um Divinylverbindungen wie z. B. Polydimethylsiloxan-bis-(propylmaleinamidsäure) oder Polydimethylsiloxan-bis-(dipropylenaminomaleinamidsäure).

Als weitere vinylische Polysiloxan-Verbindung kommt ein bevorzugtes Derivat entsprechend der Formel VIII in Frage,

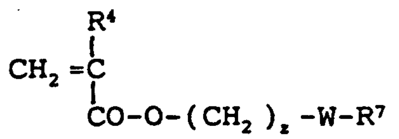

(VIII)

wobei z 0 bis 4 sein kann und $R^4$ bzw. W die oben genannte Bedeutung besitzen. $R^7$ kann entweder $R^1$ oder aber

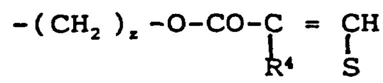

sein, wobei S bevorzugt Wasserstoff bedeutet. Beispiele für solche monovinylischen Verbindungen ($R^7 = R^1$) sind Polydimethylsiloxan-(1-propyl-3-acrylat) oder Polydimethylsiloxan-(1-propyl-3-methacrylat).

Im Falle von $R^7 \neq R^1$ handelt es sich um Divinylverbindungen, wie z.B. Polydimethylsiloxan-bis-(1-propyl-3-acrylat) oder Polydimethylsiloxan-bis-(1-propyl-3-methacrylat).

Als vinylische Esterverbindung im Rahmen der vorliegenden Erfindung werden vorzugsweise Derivate entsprechend der Formel IX eingesetzt,

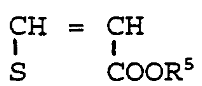

(IX)

wobei S = $COOM_a$ oder $-COOR^5$ bedeuten und $R^5$ ein aliphatischer Kohlenwasserstoffrest mit 3 bis 20 C-Atomen, ein cycloaliphatischer Kohlenwasserstoffrest mit 5 bis 8 C-Atomen sowie ein Arylrest mit 6 bis 14 C-Atomen sein kann. a und M besitzen die oben genannte Bedeutung. Beispiele für solche Esterverbindungen sind Di-n-butylmaleinat bzw. -fumarat oder Mono-n-butyl-maleinat- bzw. -fumarat.

Desweiteren können auch Verbindungen entsprechend der Formel X eingesetzt werden,

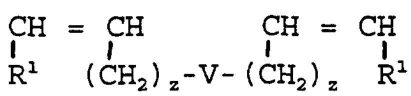

(X)

wobei z wiederum 0 bis 4 sein kann und $R^1$ die bereits bekannte Bedeutung besitzt. V kann hierbei W (also eine Polydimethylsiloxan-Gruppierung) sein, was einer Dialkenylpolydimethylsiloxan-Verbindung, wie z. B. Divinylpolydimethylsiloxan, entspricht. Alternativ hierzu kann V auch $-O-CO-C_6H_4-CO-O-$ sein. Diese Verbindungen stellen Dialkenylphthalsäure-Derivate dar. Ein typisches Beispiel für solche Phthalsäure-Derivate ist Diallylphthalat.

Die Molekulargewichte der Verbindungen, welche die Baugruppe c) bilden, können in weiten Grenzen variiert werden und liegen vorzugsweise zwischen 150 und 10000.

Gemäß einer bevorzugten Ausführungsform werden noch bis zu 50 Mol-%, insbesondere bis zu 20 Mol-%, bezogen auf die Monomeren mit den Baugruppen gemäß den Formeln I, II und III eines Vinyl-, Acrylsäure- oder Methacrylsäure-Derivates einpolymerisiert. Als monomeres Vinylderivat findet bevorzugt Styrol, Ethylen, Propylen, Isobuten oder Vinylacetat Verwendung, als monomeres Acrylsäurederivat wird bevorzugt Acrylsäure oder Methylacrylat ein-gesetzt, während als monomere Methacrylsäure-Derivate schließ-lich bevorzugt Methacrylsäuremethylmethacrylat und Hydroxyethylmethacrylat herangezogen werden.

Die Copolymere entsprechend der vorliegenden Erfindung können nach den üblichen Methoden hergestellt werden. Ein besonderer Vorteil besteht darin, daß man erfindungsgemäß ohne Lösemittel oder aber in wäßriger Lösung arbeiten kann. In beiden Fällen handelt es sich um drucklose und daher sicherheitstechnisch unbedenkliche Reaktionen.

Wird das Verfahren in wäßriger Lösung durchgeführt, so erfolgt die Polymerisation bei 20 bis 100°C mit Hilfe

eines üblichen Radikalstarters, wobei die Konzentration der wäßrigen Lösung vorzugsweise auf 30 bis 50 Gew.-% eingestellt wird. Gemäß einer bevorzugten Ausführungsform kann die radikalische Polymerisation hierbei im sauren pH-Bereich durchgeführt werden, insbesondere bei einem pH-Wert zwischen 4,0 und 6,5, wobei auf die herkömmlichen Initiatoren wie $H_2O_2$ zurückgegriffen werden kann, ohne daß es zu einer befürchteten Etherspaltung kommt, wodurch die Ausbeuten sehr stark beeinträchtigt würden.

Beim erfindungsgemäßen Verfahren wird vorzugsweise so gearbeitet, daß das ungesättigte Dicarbonsäure-Derivat in teilneutralisierter Form in wäßriger Lösung, bevorzugt zusammen mit dem Polymerisationsinitiator, vorgelegt wird und die übrigen Monomere zudosiert werden, sobald die erforderliche Reaktionstemperatur in der Vorlage erreicht ist.

Separat zugegeben werden die Polymerisations-Hilfsmittel, welche die Aktivierungsschwelle des vorzugsweise peroxidischen Initiators senken können, so daß die Copolymerisation bei relativ niedrigen Temperaturen ablaufen kann. Gemäß einer weiteren bevorzugten Ausführungsform kann das ungesättigte Dicarbonsäure-Derivat als auch der Radikalbildner in separaten oder gemeinsamen Zuläufen der Reaktorvorlage zudosiert werden, wodurch das Problem der Wärmeabführung in idealer Weise gelöst werden kann.

Die Art der verwendeten Polymerisationsinitiatoren, -aktivatoren und sonstiger Hilfmittel, wie z.B. Molekulargewichtsregler, ist relativ unproblematisch, d.h. als Initiatoren kommen die üblichen Radikalspender zum Einsatz, wie Wasserstoffperoxid, Natrium-, Kalium- oder Ammoniumperoxodisulfat, tert. Butylhydroperoxid, Dibenzoylperoxid, Natriumperoxid, 2,2'-Azobis-(2-amidino-propan)-dihydrochlorid, Azobis-(isobutyronitril) usw. Kommen Redoxsysteme zum Einsatz, so werden oben genannte Initiatoren mit reduzierend wirkenden Aktivatoren kombiniert. Beispiele für derartige Reduktionsmittel sind Fe(II)-salze, Natriumhydroxynethansulfinat-Dihydrat, -Dihydrat, Alkalimetallsulfite und -metabisulfite, Natriumhypophosphit, Hydroxylaminhydrochlorid, Thioharnstoff usw.

Ein besonderer Vorteil der erfindungsgemäßen Copolymere ist die Tatsache, daß sie auch ohne Lösemittel hergestellt werden kön-nen, was mit Hilfe der üblichen radikalischen Starter bei Temperaturen zwischen 20 und 150°C erfolgen kann. Diese Variante kann aus wirtschaftlichen Gründen insbesondere dann angewendet werden, wenn die erfindungsgemäßen Copolymeren in wasserfreier Form direkt ihrer erfindungsgemäßen Verwendung zugeführt werden sollen, weil dann eine aufwendige Abtrennung des Lösemittels, insbesondere des Wassers bspw. durch Sprühtrocknung entfallen kann.

Die erfindungsgemäßen Copolymere eignen sich hervorragend als Zusatzmittel für wäßrige Suspensionen auf Basis von anorganischen Bindemitteln, wie z. B. Zement, Kalk und Gips. Hierbei werden sie in einer Menge von 0,01 bis 10 Gew.-%, vorzugsweise 0,05 bis 3 Gew.-%, bezogen auf das Gewicht des anorganischen Bindemittels, eingesetzt. Die Copolymere besitzen hierbei eine ausgezeichnete und langanhaltende verflüssigende Wirkung, ohne hohe Anteile von Luftporen in die entsprechende Bindemittelmischung einzuführen und ohne hierbei Einbußen bei der Festigkeit und Beständigkeit des erhärteten Baustoffs hinnehmen zu müssen.

Die nachfolgenden Beispiele sollen die Erfindung näher erläutern.

Beispiel 1

In einem Reaktionsgefäß mit Thermometer, Rührer, Rückflußkühler und zwei Anschlüssen für separate Zuläufe wurden 270 g Wasser vorgelegt. Unter Rühren wurden 32,7 g (0,334 Mol) Maleinsäureanhydrid und 25,0 g 50 %ige wäßrige Natronlauge zugesetzt, wobei die Temperatur durch Kühlen unter 30 °C gehalten wurde. Anschließend wurden 100 mg Eisensulfat-Heptahydrat sowie 18,5 g 30 %iges Wasserstoffperoxid unter Rühren zugegeben und aus separaten Zulaufgefäßen eine Lösung aus 5,1 g Natriumhydroxymethansulfinat-Dihydrat und 12,5 g Wasser (Zulauf 1) einerseits über 75 Minuten und eine Lösung aus 155 g (0,310 Mol) Methylpolyethylenglykol-monovinylether (MW 500) und 12,1 g (0,006 Mol) Polypropylenglykol-bis-maleinamidsäure (MW 2000) (Zulauf 2) andererseits über 60 Minuten zugegeben.

Nach beendeter Zugabe wurde noch 30 Minuten bei 35 °C gerührt und das Reaktionsgemisch auf 25 °C abgekühlt. Durch Zugabe von 56,3 g 20 %ige wäßrige Natronlauge wurde ein pH-Wert von 7,60 eingestellt. Es wurden 583 g einer gelb gefärbten, trüben wäßrigen Zubereitung erhalten, die einen Feststoffgehalt von 37,4 Gew.-% aufwies.

Beispiel 2

Es wurde - wie unter Beispiel 1 beschrieben - verfahren, jedoch mit folgender Zusammensetzung des Vinylether-Zulaufs (Zulauf 2):

| | |
|---|---|
| 155,0 g (0,310 Mol) | Methylpolyethylenglykolmonovinylether (MW 500) |
| 7,4 g (0,001 Mol) | Polydimethylsiloxan-bis-(dipropylenaminomaleinamidsäure) (MW 5400) |

Das Reaktionsgemisch wies nach beendeter Zugabe einen pH-Wert von 5,02 auf und wurde anschließend mit 20 %iger wäßriger Natronlauge (58,3 g) neutralisiert. Im Endprodukt wurden 35,5 Gew.-% Feststoff gefunden.

Beispiel 3

Beispiel 1 wurde wiederholt mit folgenden Bestandteilen des Zulaufs 2:

| | |
|---|---|
| 116,0 g (0,232 Mol) | Methylpolyethylenglykolmonovinylether (MW 500) |
| 9,1 g (0,0875 Mol) | Styrol |
| 5,2 g (0,0026 Mol) | Polypropylenglykol-bis-maleinamidsäure (MW 2000) |

Das nach der Neutralisation mit 20 %iger Natronlauge erhaltene, wasserdispergierte Reaktionsprodukt war frei von restmonomerem Styrol und wies einen Feststoffgehalt von 33,7 Gew.-% auf.

Beispiel 4

In dem in Beispiel 1 beschriebenen Reaktor wurden 160 g Wasser und 55,2 g (0,175 Mol) N-(4-Sulfophenyl) maleinsäuremonoamid-Dinatriumsalz vorgelegt. Unter Rühren wurden nacheinander 1,5 g (0,015 Mol) Maleinsäureanhydrid, 50 mg Eisensulfat-Heptahydrat und 9,3 g 30 %iges Wasserstoffperoxid zugegeben. Nach Einstellung einer Reaktionstemperatur von 26 °C wurden aus separaten Zuläufen eine Lösung von 2,6 g Natriumhydroxymethansulfinat-Dihydrat in 6,3 g Wasser über einen Zeitraum von 75 Minuten und eine Mischung aus 77 g (0,154 Mol) Methylpolyethylenglykol-monovinylether (MW 500) und 2,5 g (0,001 Mol) Polypropylenglykol-bis-maleinamidsäure (MW 2000) über einen Zeitraum von 60 Minuten zugegeben. Nach beendeter Zugabe wurde noch 30 Minuten bei 35 °C gerührt, auf 25 °C abgekühlt und durch Zugabe von 9,59 g 20 %ige Natronlauge ein pH-Wert von 7,50 eingestellt.

Es wurden 591 g einer dunklen, getrübten Mischung mit einem Feststoffgehalt von 37,5 Gew.-% erhalten.

Beispiel 5

Beispiel 1 wurde wiederholt, jedoch wurde anstelle von Polypropylenglykol-bis-maleinamidsäure (MW 2000) im Zulauf 1 ein Umsetzungsprodukt von Polymethoxypropylenoxid-block-ethylenoxid-block-propylenglykolamin (32 PO + 3 EO) des mittleren Molekulargewichts von 2 000 g/Mol mit Maleinsäureanhydrid in einer Menge von 3,5 g (0,0018 Mol) eingesetzt (Feststoffanteil des Endproduktes: 36,4 Gew.-%, Auswaage: 591 g).

Beispiel 6

Beispiel 5 wurde mit einem Umsetzungsprodukt aus einem monofunktionellen Ethylenglykol/Propylenglykolamin (9 PO + 1 EO) des mittleren Molekulargewichtes von 600 g/Mol mit Maleinsäureanhydrid wiederholt. Das hellbraun gefärbte Endprodukt wies einen Feststoffanteil von 36,2 Gew.-% auf.

Beispiel 7

Es wurde analog der im Beispiel 1 beschriebenen Umsetzung verfahren, jedoch mit folgender Zusammensetzung von Zulauf 2:

| | |
|---|---|
| 155,0 g (0,310 Mol) | Methylpolyethylenglykolmonovinylether (MW 500) |
| 1,6 g (0,016 Mol) | Maleinsäureanhydrid |
| 5,6 g (0,025 Mol) | Maleinsäuredi-n-butylester |

Nach der Neutralisation verblieben 590 g einer gelblich gefärbten, leicht getrübten wäßrigen Lösung mit einem Feststoffgehalt von 36,5 Gew.-%.

Beispiel 8

Beispiel 7 wurde mit 5,6 g (0,023 Mol) Phthalsäurediallylester wiederholt, welches anstelle des dort verwendeten Maleinsäuredi-n-butylesters eingesetzt wurde. Erhalten wurden 595 g einer stark getrübten Emulsion des Copolymerisats mit einem Feststoffgehalt von 36,5 Gew.-%.

Beispiel 9

Ein Copolymer wurde aus

| | |
|---|---|
| 18,2 g (0,186 Mol) | Maleinsäureanhydrid |
| 92,7 g (0,169 Mol) | Polyethylenglykol-monoallylether (MW 550) |
| und 4,0 g (0,002 Mol) | Polypropylenglykol-bis-maleinamidsäure (MW 2000) |

in wäßriger Lösung hergestellt . Im Gegensatz zu der in den Beispielen 1 bis 8 beschriebenen Verfahrensweise wurde der Oxyalkylenalkenylether vollständig vorgelegt und nicht wie dort zudosiert. Das braune getrübte Endprodukt enthielt 29,4 Gew.-% Feststoff.

Beispiel 10

Ein Copolymer aus

| | |
|---|---|
| 18,2 g (0,186 Mol) | Maleinsäureanhydrid |
| 46,4 g (0,084 Mol) | Polyethylenglykol-monoallylether (MW 550) |
| 4,0 g (0,002 Mol) | Polypropylenglykol-bis-maleinamidsäure (MW 2000) |
| und 8,8 g (0,084 Mol) | Styrol |

wurde in wäßriger Lösung analog Beispiel 9 hergestellt. Erhalten wurde eine gelbe wäßrige Lösung mit einem Feststoffgehalt von 31,7 Gew.-%.

Beispiel 11

Ein Copolymer wurde aus

| | |
|---|---|
| 150,0 g (0,300 Mol) | Methylpolyethylenglykolmonovinylether (MW 500) |
| 32,7 g (0,334 Mol) | Maleinsäureanhydrid |
| 5,5 g (0,005 Mol) | Polydimethylsiloxan-bis-(1-propyl-3-methacrylat) (MW 1100) |

synthetisiert nach einer lösemittelfreien Variante mit Azo-diisobuttersäurenitril als Initiator. Das Produkt fiel in Form einer hochviskosen getrübten Schmelze an, wurde durch Zugabe von 245 g Wasser verdünnt und mit 74,6 g 20 %iger wäßriger Natronlauge auf einen pH-Wert von 7,40 eingestellt. Es resultierte eine dunkelbraune wäßrige Lösung, die einen Feststoffgehalt von 37,7 Gew.-% aufwies.

Beispiel 12

Nach einer lösemittelfreien Variante gemäß Beispiel 11 wurde ein Copolymerisat aus

| | |
|---|---|
| 150,0 g (0,300 Mol) | Methylpolyethylenglykolmonovinylether (MW 500) |
| und 32,7 g (0,334 Mol) | Maleinsäureanhydrid |

hergestellt, welches in einer polymeranalogen Umsetzung mit

| | |
|---|---|
| 9,1 g (0,005 Mol) | Polymethoxypropylen-blockethylen-block-propylen-glykolamin (32 PO + 3 EO) (MW 2000) |

bei 90 °C umgesetzt wurde.

Nachdem das Produkt mit Wasser verdünnt und mit Natronlauge neutralisiert worden war, verblieb eine dunkelrot gefärbte trübe Lösung mit einem Feststoffgehalt von 39,0 Gew.-%.

Beispiel 13

Beispiel 12 wurde wiederholt mit

| | |
|---|---|
| 9,1 g | (0,015 Mol) eines aminterminierten monofunktionellen Blockcopolymerisats aus 9 PO-Einheiten und einer EO-Einheit (M = 600 g/Mol) |

Der Feststoffanteil der erhaltenen rotbraunen trüben Lösung betrug 38,7 Gew.-%.

Beispiel 14

Anstelle des Blockcopolymerisats in Beispiel 12 wurden 9,1 g (0,005 Mol) eines difunktionellen Polyoxypropylenglykol-amins (MW 2000) verwendet. Das tiefbraun gefärbte Endprodukt enthielt 39,6 Gew.-% Feststoff.

Beispiel 15

In einer lösemittelfreien Variante wurden

| | |
|---|---|
| 116,9 g (0,334 Mol) | Methylpolyethylenglykolmonoallylether (MW 350) |
| 32,7 g (0,334 Mol) | Maleinsäureanhydrid |

bei einer Reaktionstemperatur von 90 °C nach einem Zulaufverfahren polymerisiert und im Anschluß daran nachträglich bei 95 °C mit 2,5 g (0,0025 Mol) Polydimethylsiloxan-bis-(1-propyl-3-amin) (MW 1000) umgesetzt. Es resultierte eine goldgelbe Polymerschmelze, die nach Abkühlen auf Raumtemperatur mit Wasser verdünnt und mit Natronlauge neutralisiert wurde. In der hellgelben wäßrigen Lösung des Endproduktes wurden 35,2 Gew.-% Feststoff gefunden.

Vergleichsbeispiel 1

Käufliches Betonfließmittel Melment L 10 (SKW Trostberg AG) auf der Basis eines sulfonierten Melamin-Formaldehyd-Polykondensates.

Vergleichsbeispiel 2

Kommerziell erhältlicher Superverflüssiger LOMAR D (Henkel KGaA) für hydraulische Bindemittel enthaltende Baustoffmischungen auf der Basis eines Naphthalinsulfonsäure-Formaldehyd-Polykondensationsproduktes.

Vergleichsbeispiel 3

Handelsübliches Copolymerisat Narlex LD 36 V (National Starch & Chemical Ltd.) auf Basis eines Copolymerisats aus Acrylsäure/Acrylsäurehydroxyalkylester.

Vergleichsbeispiel 4

Maleinsäuremonoester-Styrol-Copolymerisat mit der Handelsbezeichnung POZZOLITH 330 N (MBT Sandoz AG).

Vergleichsbeispiel 5

Beispiel 1 wurde wiederholt, jedoch ohne die dort verwendete Polypropylenglykol-bis-maleinamidsäure (MW 2000).

Die wäßrigen Copolymerisat-Zubereitungen wurden einer vergleichenden Testung als Fließmittel für zementhaltige Feststoffsuspensionen unterzogen, um ihre gegenüber herkömmlichen Fließmitteln verbesserten Eigenschaften nachzuweisen.

Anwendungsbeispiel 1

900 g Portlandzement PZ 35 Kiefersfelden wurden mit 1 350 g Normensand (Grobanteil : Feinanteil = 2 : 1) und 405 g Wasser (Wasser-Zement-Verhältnis = 0,45), welches die erfindungsgemäßen bzw. die Vergleichsprodukte in gelöster Form enthielt, normgerecht angerührt. In Abhängigkeit von der Wirksamkeit der einzelnen Produkte wurde die Dosierung so gewählt, daß vergleichbare Konsistenzen resultierten.

Die Fließmaße der Zementmörtel wurden über einen Zeitraum von 60 Minuten ermittelt. Hierzu wurde eine Edelstahl-Fließrinne von 80 cm Länge mit Einfülltrichter (1 000 ml Füllmenge) verwendet.

Die verflüssigende Wirkung eines Fließmittels ist umso besser, je größer die Wegstrecke ist, die von einer konstanten Frischmörtelmenge innerhalb eines Zeitraums von 120 Sekunden nach öffnen des gefüllten Trichters zurückgelegt wird. Gleichzeitig wurde von den hergestellten Baustoffmischungen eine Bestimmung des Luftgehaltes durchgeführt.

Die Ergebnisse dieser vergleichenden Testung sind in der Tabelle 1 zusammengefaßt.

Tabelle 1

| Zusatzmittel | Feststoff [Gew.-%] | Dosierung [Gew.-%[1)]] | Fließmaß in mm nach | | | Luft [Vol.-%] |
|---|---|---|---|---|---|---|
| | | | 10 min. | 30 min. | 60 min. | |
| Bsp. 1 | 37,4 | 0,20 | 540 | 540 | 540 | 2,9 |
| Bsp. 2 | 35,5 | 0,20 | 590 | 600 | 600 | 3,7 |
| Bsp. 3 | 33,7 | 0,20 | 570 | 560 | 530 | 3,0 |
| Bsp. 4 | 37,6 | 0,20 | 510 | 470 | 460 | 3,0 |
| Bsp. 5 | 36,4 | 0,20 | 560 | 560 | 550 | 3,4 |
| Bsp. 6 | 36,2 | 0,20 | 570 | 560 | 560 | 3,6 |
| Bsp. 7 | 36,5 | 0,20 | 620 | 620 | 610 | 3,4 |
| Bsp. 8 | 36,5 | 0,20 | 600 | 620 | 600 | 4,3 |
| Bsp. 9 | 29,4 | 0,25 | 560 | 560 | 560 | 3,0 |
| Bsp. 10 | 31,7 | 0,25 | 560 | 520 | 500 | 3,0 |
| Bsp. 11 | 37,7 | 0,20 | 600 | 680 | 700 | 3,5 |
| Bsp. 12 | 39,0 | 0,20 | 650 | 660 | 660 | 2,9 |
| Bsp. 13 | 38,7 | 0,20 | 630 | 630 | 630 | 2,9 |
| Bsp. 14 | 39,6 | 0,20 | 600 | 600 | 600 | 3,2 |
| Bsp. 15 | 35,2 | 0,20 | 570 | 570 | 560 | 4,2 |
| Vgl. 1 | 40,5 | 0,50 | 340 | 220 | 190 | 1,8 |
| Vgl. 2 | 37,0 | 0,50 | 570 | 520 | 410 | 3,7 |
| Vgl. 4 | 33,3 | 0,25 | 580 | 520 | 490 | 2,9 |
| Vgl. 5 | 35,8 | 0,20 | 580 | 590 | 590 | 10,9 |
| W/Z = 0,45 | | | | | | |

[1)] bezogen auf Zementgehalt PZ 35 Kiefersfelden

Anwendungsbeispiel 2

Normgemäß wurden in einem Betonzwangsmischer 5,3 kg Portlandzement (PZ 35 Kiefersfelden) mit 33,0 kg Zuschlägen (Sieblinie 0 bis 32 mm) und 2,65 kg Wasser (abzüglich des Wassers aus dem Zusatzmittel) vermischt. Die wäßrigen Lösungen der erfindungsgemäßen bzw. der Vergleichsprodukte wurden zugesetzt und 10 bzw. 30 Minuten nach Zugabe der Fließmittel erfolgte die Bestimmung des Ausbreitmaßes nach DIN 1048 (Doppelbestimmungen).

Im Anschluß an die Messung der Ausbreitmaße wurden Prüfkörper mit 15 x 15 x 15 cm Kantenlänge hergestellt und die Druckfestigkeit nach 24 Stunden sowie der Luftporenanteil bestimmt.

Die Ergebnisse sind in der Tabelle 2 zusammengefaßt.

Tabelle 2

| Betontestung nach DIN 1048 | | | | | | |
|---|---|---|---|---|---|---|
| Zusatzmittel | Dosierung | Ausbreitmaß in mm nach | | Rohdichte | Luft | 24-h-Festigkeit |
| | [Gew.-%[1)]] | 10 min. | 30 min. | [kg/m$^3$] | [Vol.-%] | [N/mm$^2$] |
| Bsp. 1 | 0,24 | 560 | 500 | 2,48 | 2,0 | 9,6 |
| Bsp. 2 | 0,22 | 575 | 515 | 2,46 | 2,8 | 7,8 |

[1)] bezogen auf Zementgehalt PZ 35 Kiefersfelden

Tabelle 2 (fortgesetzt)

| Betontestung nach DIN 1048 | | | | | | |
|---|---|---|---|---|---|---|
| Zusatzmittel | Dosierung | Ausbreitmaß in mm nach | | Rohdichte | Luft | 24-h-Festigkeit |
| | [Gew.-%[1)]] | 10 min. | 30 min. | [$kg/m^3$] | [Vol.-%] | [$N/mm^2$] |
| Bsp. 3 | 0,24 | 555 | 495 | 2,47 | 2,4 | 8,8 |
| Bsp. 4 | 0,26 | 550 | 545 | 2,49 | 1,6 | 9,6 |
| Bsp. 5 | 0,22 | 560 | 510 | 2,47 | 2,5 | 9,4 |
| Bsp. 6 | 0,22 | 570 | 500 | 2,46 | 2,7 | 9,0 |
| Bsp. 7 | 0,23 | 575 | 495 | 2,45 | 3,2 | 8,3 |
| Bsp. 8 | 0,25 | 575 | 500 | 2,49 | 1,8 | 7,9 |
| Bsp. 9 | 0,26 | 555 | 520 | 2,46 | 2,8 | 7,7 |
| Bsp. 10 | 0,26 | 550 | 500 | 2,47 | 2,6 | 9,3 |
| Bsp. 11 | 0,21 | 585 | 520 | 2,45 | 3,4 | 9,8 |
| Bsp. 12 | 0,20 | 580 | 525 | 2,48 | 2,0 | 10,5 |
| Bsp. 13 | 0,20 | 580 | 530 | 2,49 | 1,5 | 9,9 |
| Bsp. 14 | 0,21 | 575 | 515 | 2,47 | 2,5 | 9,4 |
| Bsp. 15 | 0,20 | 540 | 550 | 2,45 | 3,3 | 6,4 |
| Vgl. 1 | 0,46 | 545 | 455 | 2,50 | 1,1 | 14,5 |
| Vgl. 2 | 0,37 | 540 | 385 | 2,50 | 1,5 | 16,4 |
| Vgl. 3 | 0,23 | 540 | 435 | 2,46 | 2,8 | 10,6 |
| Vgl. 5 | 0,24 | 555 | 485 | 2,35 | 7,1 | 5,0 |
| W/Z = 0,50 | | | | | | |

[1)] bezogen auf Zementgehalt PZ 35 Kiefersfelden

## Patentansprüche

**1.** Copolymere auf Basis von Oxyalkylenglykol-Alkenylethern und ungesättigten Dicarbonsäure-Derivaten bestehend aus

a) 10 bis 90 Mol-% Baugruppen der Formel Ia und/oder Ib

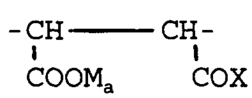

Ia

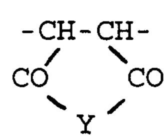

Ib

wobei

M = Wasserstoff, ein- oder zweiwertiges Metallkation, Ammoniumion, organischer Aminrest

a = 1, oder für den Fall, daß M ein zweiwertiges Metallkation ist, % ist,

X = ebenfalls $-OM_a$ oder $-O-(C_mH_{2m}O)_n-R^1$ mit $R^1$ = H, aliphatischer Kohlenwasserstoffrest mit 1 bis 20 C-Atomen, cycloaliphatischer Kohlenwasserstoffrest mit 5 bis 8 C-Atomen, ggf. substituierter Arylrest mit 6 bis 14 C-Atomen, m = 2 bis 4, n = 0 bis 100, $-NHR^2$ und/oder $-NR^2_2$ mit $R^2 = R^1$ oder $-CO-NH_2$ sowie

Y = O, $NR^2$ bedeuten

b) 1 bis 89 Mol-% Baugruppen der Formel II

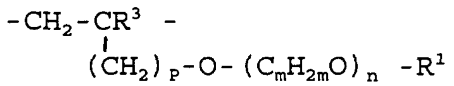

II

worin

$R^3$ = H, aliphatischer Kohlenwasserstoffrest mit 1 bis 5 C-Atomen
p = 0 bis 3
und $R^1$, m, n oben genannte Bedeutung besitzen sowie

c) 0,1 bis 10 Mol-% Baugruppen der Formel IIIa oder IIIb

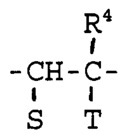

IIIa

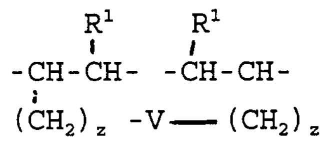

IIIb

wobei

S = -H, $-COOM_a$, $-COOR^5$
T =

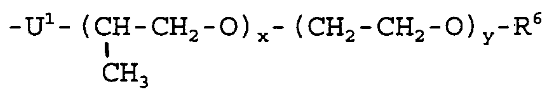

$-W-R^7$

$$-CO-\left[NH-(CH_2)_3\right]_s-W-R^7$$

$-CO-O-(CH_2)_z-W-R^7$
$-(CH_2)_z-V-(CH_2)_z-CH=CH-R^1$
$-COOR^5$ im Falle von S = $-COOR^5$ oder $COOM_a$
$U^1$ = -CO-NH-, -O-, $-CH_2O-$
$U^2$ = -NH-CO-, -O-, $-OCH_2$
V = $-O-CO-C_6H_4-CO-O-$ oder -W-
W =

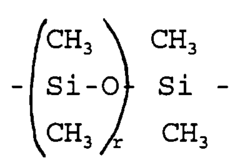

$R^4$ = H, $CH_3$
$R^5$ = aliphatischer Kohlenwasserstoffrest mit 3 bis 20 C-Atomen, cycloaliphatischer Kohlenwasserstoffrest mit 5 bis 8 C-Atomen, Arylrest mit 6 bis 14 C-Atomen
$R^6$ = $R^1$,

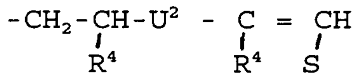

$R^7 =$ $R^1$,

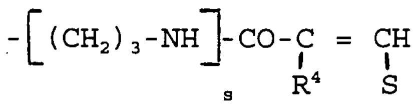

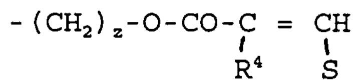

r = 2 bis 100 s = 1, 2 z = 0 bis 4
x = 1 bis 150 y = 0 bis 15 bedeuten, mit der Maßgabe, daß $z \neq 0$ ist, wenn T = $-CO-O-(CH_2)_2-W-R^7$.

**2.** Copolymere nach Anspruch 1,
**dadurch gekennzeichnet,**
daß sie aus 40 bis 55 Mol-% Baugruppen der Formel Ia und/oder Ib, 40 bis 55 Mol-% Baugruppen der Formel II und 1 bis 5 Mol-% Baugruppen der Formel IIIa oder IIIb bestehen.

**3.** Copolymere nach einem der Ansprüche 1 und 2,
**dadurch gekennzeichnet,**
daß M ein ein- oder zweiwertiges Metallkation ausgewählt aus der Gruppe Natrium-, Kalium-, Calcium- oder Magnesiumionen bedeutet.

**4.** Copolymere nach einem der Ansprüche 1 bis 3,
**dadurch gekennzeichnet,**
daß im Falle von $R^1$ = Phenyl der Phenylrest noch durch Hydroxyl-, Carboxyl- oder Sulfonsäure-Gruppen substituiert ist.

**5.** Copolymere nach einem der Ansprüche 1 bis 4,
**dadurch gekennzeichnet,**
daß in der Formel II p = 0 und m = 2 bedeuten.

**6.** Copolymere nach einem der Ansprüche 1 bis 5,
**dadurch gekennzeichnet,**
daß sie zusätzlich bis zu 50 Mol-%, insbesondere bis zu 20 Mol-%, bezogen auf die Summe der Baugruppen der Formeln I, II und III, Baugruppen enthalten, deren Monomere ein Vinylderivat ausgewählt aus Styrol, Ethylen, Propylen, Isobuten und Vinylacetat, ein Acrylsäure-Derivat ausgewählt aus Acrylsäure und Methylacrylat oder ein Methacrylsäure-Derivat ausgewählt aus Methacrylsäure, Methylmethacrylat und Hydroxyethylmethacrylat darstellen.

**7.** Verfahren zur Herstellung der Copolymeren nach den Ansprüchen 1 bis 6,
**dadurch gekennzeichnet,**
daß man 10 bis 90 Mol-% eines ungesättigten Dicarbonsäure-Derivats, 9 bis 89 Mol-% eines Oxyalkylenglykolalkenylethers und 0,1 bis 10 Mol-% einer vinylischen Polyalkylenglykol-, Polysiloxan- oder Esterverbindung mit Hilfe eines radikalischen Starters polymerisiert.

**8.** Verfahren nach Anspruch 7,
**dadurch gekennzeichnet,**
daß man 40 bis 55 Mol-% eines ungesättigten Dicarbonsäure-Derivats, 40 bis 55 Mol-% eines Oxyalkylenglykolalkenylethers und 1 bis 5 Mol-% einer vinylischen Polyalkylenglykol-, Polysiloxan- oder Esterverbindung einsetzt.

**9.** Verfahren nach Anspruch 7 oder 8,
**dadurch gekennzeichnet,**
daß man noch zusätzlich bis zu 50 Mol-%, insbesondere bis zu 20 Mol-%, bezogen auf die Monomeren mit den Baugruppen gemäß den Formeln I, II und III eines Vinyl-Derivats ausgewählt aus Styrol, Ethylen, Propylen, Isobuten und Vinylacetat, eines Acrylsäure-Derivats ausgewählt aus Acrylsäure und Methylacrylat oder eines Methacrylsäure-Derivates ausgewählt aus Methacrylsäure, Methylmethacrylat und Hydroxyethylmethacrylat copolymerisiert.

**10.** Verfahren nach einem der Ansprüche 7 bis 9,
**dadurch gekennzeichnet,**
daß man die Polymerisation in wäßriger Lösung bei einer Temperatur von 20 bis 100°C durchführt.

**11.** Verfahren nach Anspruch 10,
**dadurch gekennzeichnet,**
daß die Konzentration der Monomere in der wäßrigen Lösung 30 bis 50 Gew.-% beträgt.

**12.** Verfahren nach einem der Ansprüche 7 bis 9,
**dadurch gekennzeichnet,**
daß man die Polymerisation ohne Lösemittel mit Hilfe eines radikalischen Starters bei Temperaturen von 20 bis 150°C durchführt.

**13.** Verwendung der Copolymere nach einem der Ansprüche 1 bis 6 als Zusatzmittel für wäßrige Suspensionen auf Basis von anorganischen Bindemitteln, insbesondere Zement, Kalk, Gips.

**Claims**

**1.** Copolymers based on hydroxyalkylene glycol alkenyl ethers and unsaturated dicarboxylic acid derivatives consisting of

a) 10 to 90 mol % of components of formula Ia and/or Ib

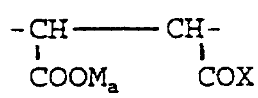

Ia

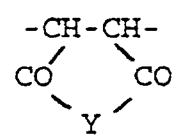

Ib

wherein M represents hydrogen, monovalent or divalent metal cation, ammonium ion, organic amine radical

a represents 1, or where M is a divalent metal cation, is ½,
X also represents $-OM_a$ or
$-O-(C_mH_{2m}O)_n-R^1$ with $R^1$ represents H, aliphatic hydrocarbon radical with 1 to 20 carbon atoms, cycloaliphatic hydrocarbon radical with 5 to 8 carbon atoms, optionally substituted aryl radical with 6 to 14 carbon atoms, m represents 2 to 4, n represents 0 to 100,
$-NHR^2$ and/or $-NR^2_2$ with $R^2$ represents $R^1$ or $-CO-NH_2$ and
Y represents O, $NR^2$

b) 1 to 89 mol % of components of formula II

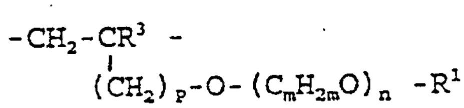

II

where

$R^3$ represents H, aliphatic hydrocarbon radical with 1 to 5 carbon atoms
p represents 0 to 3
and $R^1$, m, n have the above-mentioned meaning and

c) 0.1 to 10 mol % of components of formula IIIa or IIIb

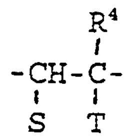

IIIa

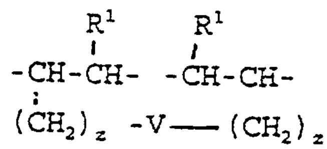

IIIb

wherein

S represents -H, $-COOM_a$, $-COOR^5$

T represents

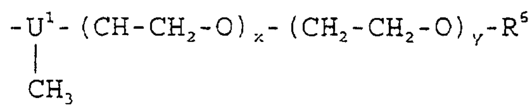

$-W-R^7$
$-CO-[NH-(CH_2)_3]_s-W-R^7$
$-CO-O-(CH_2)_z-W-R^7 - (CH_2)_z-V-(CH_2)_z-CH=CH-R^1$
$-COOR^5$ if S represents $-COOR^5$ or $COOM_a$

$U^1$ represents -CO-NH-, -O-, $-CH_2O-$

$U^2$ represents -NH-CO-, -O-, $-OCH_2$

V represents $-O-CO-C_6H_4-CO-O-$ or -W-

W represents

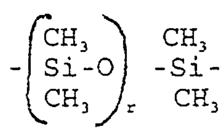

$R^4$ represents H, $CH_3$

$R^5$ represents aliphatic hydrocarbon radical with 3 to 20 carbon atoms, cycloaliphatic hydrocarbon radical with 5 to 8 carbon atoms, aryl radical with 6 to 14 carbon atoms

$R^6$ represents $R^1$,

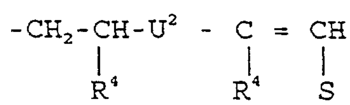

$R^7$ represents $R^1$,

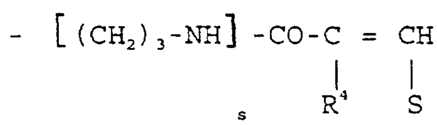

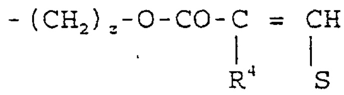

| | |
|---|---|
| r represents | 2 to 100 |
| s represents | 1, 2 |
| x represents | 1 to 150 |
| y represents | 0 to 15 |
| z represents | 0 to 4 |

provided that $z \neq 0$, when T represents $-CO-O-(CH_2)_z-W-R^7$.

**2.** Copolymers according to claim 1, characterised in that they consist of 40 to 55 mol % of components of formula Ia and/or Ib, 40 to 55 mol % of components of formula II and 1 to 5 mol % of components of formula IIIa or IIIb.

**3.** Copolymers according to any of claims 1 or 2, characterised in that M represents a monovalent or divalent metal cation selected from the group comprising sodium, potassium, calcium or magnesium ions.

**4.** Copolymers according to any of claims 1 to 3, characterised in that if $R^1$ represents phenyl, the phenyl radical is further substituted by hydroxylic, carboxylic or sulphonic acid groups.

**5.** Copolymers according to claims 1 to 4, characterised in that in formula II p represents 0 and m represents 2.

**6.** Copolymers according to any of claims 1 to 5, characterised in that they additionally contain up to 50 mol %, in particular up to 20 mol % based on the total of components of formulae I, II and III, of components of which the monomers are a vinyl derivative selected from styrene, ethylene, propylene, isobutene and vinyl acetate, an acrylic acid derivative selected from acrylic acid and methyl acrylate or a methacrylic acid derivative selected from methacrylic acid, methyl methacrylate and hydroxyethyl methacrylate.

**7.** Process for producing copolymers according to claims 1 to 6, characterised in that 10 to 90 mol % of an unsaturated dicarboxylic acid derivative, 9 to 89 mol % of a hydroxyalkylene glycol alkenyl ether and 0.1 to 10 mol % of a vinyl polyalkylene glycol, polysiloxane or ester compound are polymerised with the aid of a radical starter.

**8.** Process according to claim 7, characterised in that 40 to 55 mol % of an unsaturated dicarboxylic acid derivative, 40 to 55 mol % of a hydroxyalkylene glycol alkenyl ether and 1 to 5 mol % of a vinyl polyalkylene glycol, polysiloxane or ester compound are used.

**9.** Process according to claim 7 or 8, characterised in that additionally up to 50 mol %, in particular up to 20 mol % based on the monomers, are copolymerised with the components according to formulae I, II and III of a vinyl derivative selected from styrene, ethylene, propylene, isobutene and vinyl acetate, of an acrylic acid derivative selected from acrylic acid and methyl acrylate or a methacrylic acid derivative selected from methacrylic acid, methylmethacrylate and hydroxyethyl methacrylate.

**10.** Process according to any of claims 7 to 9, characterised in that polymerisation is carried out in aqueous solution at a temperature of 20 to 100°C.

**11.** Process according to claim 10, characterised in that the concentration of monomers in the aqueous solution is 30 to 50 wt.%.

**12.** Process according to any of claims 7 to 9, characterised in that polymerisation is carried out without solvent with the aid of a radical starter at temperatures of 20 to 150°C.

**13.** Use of the copolymers according to any of claims 1 to 6 as additives for aqueous suspensions based on inorganic binders, in particular cement, lime, gypsum.

**Revendications**

**1.** Copolymères à base d'éthers alcényliques d'oxyalkylèneglycols et de dérivés d'acides dicarboxyliques insaturés, constitués de

a) 10 à 90 % en mol de groupes constitutifs de formule Ia et/ou Ib

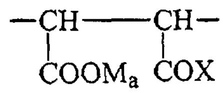

Ia

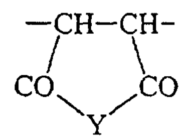

Ib

dans lesquelles

M est un atome d'hydrogène, un cation métallique monovalent ou divalent, un ion ammonium ou un reste d'amine organique,
a est égal à 1 ou, dans le cas où M est un cation métallique divalent, a est égal à 1/2,
X est également un groupe $-OM_a$ ou représente un groupe $-O-(C_mH_{2m}O)_n-R^1$ dans lequel $R^1$ est un atome d'hydrogène, un reste hydrocarboné aliphatique de 1 à 20 atomes de carbone, un reste hydrocarboné cycloaliphatique de 5 à 8 atomes de carbone ou un reste aryle de 6 à 14 atomes de carbone éventuellement substitué, m = 2 à 4, n = 0 à 100, ou un groupe -NHR2 et/ou $-NR^2_2$ dans lequel $R^2 = R^1$ ou $-CO-NH_2$, et
Y est O ou $NR^2$;

b) 1 à 89 % en mol de groupes constitutifs de formule II

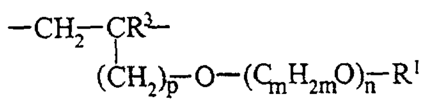

II

dans laquelle

$R^3$ est un atome d'hydrogène ou un reste hydrocarboné aliphatique de 1 à 5 atomes de carbone,
p = 0 à 3
et $R^1$, m et n ont la signification indiquée ci-dessus, et

c) 0,1 à 10 % en mol de groupes constitutifs de formule IIIa ou IIIb

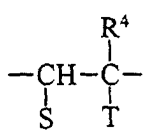

IIIa

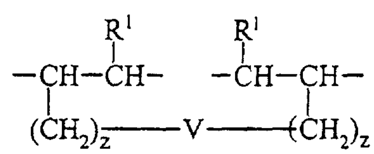

IIIb

dans lesquelles

S = -H, $-COOM_a$, $-COOR^5$

T = 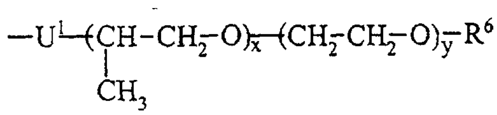

-W-$R^7$
-CO-$[NH-(CH_2)_3]_s$-W-$R^7$
-CO-O-$(CH_2)_z$-W-$R^7$
-$(CH_2)_z$-V-$(CH_2)_z$-CH=CH-$R^1$
-$COOR^5$ dans le cas où S = -$COOR^5$ ou -$COOM_a$

$U^1$ = -CO-NH-, -O-, -$CH_2$O-
$U^2$ = -NH-CO-, -O-, -$OCH_2$-
V = -O-CO-$C_6H_4$-CO-O- ou -W-
W =

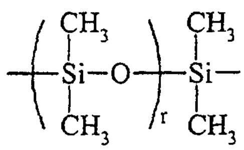

$R^4$ = H, $CH_3$
$R^5$ = un reste hydrocarboné aliphatique de 3 à 20 atomes de carbone, un reste hydrocarboné cycloaliphatique de 5 à 8 atomes de carbone ou un reste aryle de 6 à 14 atomes de carbone
$R^6$ = $R^1$,

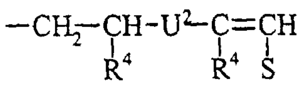

$R^7$ = $R^1$,

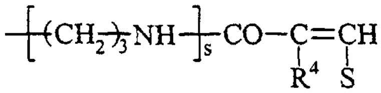 , 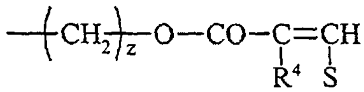

r = 2 à 100
s = 1,2
z = 0 à 4
x = 1 à 150
y = 0 à 15

à condition que z soit différent de 0 lorsque T = -CO-O-$(CH_2)_z$-W-$R^7$.

**2.** Copolymères selon la revendication 1, caractérisés en ce qu'ils sont constitués de 40 à 55 % en mol de groupes constitutifs de formule Ia et/ou Ib, de 40 à 55 % en mol de groupes constitutifs de formule II et de 1 à 5 % en mol de groupes constitutifs de formule IIIa ou IIIb.

**3.** Copolymères selon l'une des revendications 1 et 2, caractérisés en ce que M est un cation métallique monovalent ou divalent choisi dans le groupe constitué par les ions sodium, potassium, calcium ou magnésium.

**4.** Copolymères selon l'une des revendications 1 à 3, caractérisés en ce que, dans le cas où $R^1$ est un phényle, le reste phényle est substitué en outre par des groupes hydroxyle, carboxyle ou acide sulfonique.

**5.** Copolymères selon l'une des revendications 1 à 4, caractérisés en ce que, dans la formule II, p = 0 et m = 2.

6. Copolymères selon l'une des revendications 1 à 5, caractérisés en ce qu'ils contiennent en outre jusqu'à 50 % en mol, en particulier jusqu'à 20 % en mol, par rapport à la somme des groupes constitutifs ayant les formules I, II et III, de groupes constitutifs dont les monomères représentent un dérivé vinylique choisi parmi le styrène, l'éthylène, le propylène, l'isobutène et l'acétate de vinyle, un dérivé d'acide acrylique choisi parmi l'acide acrylique et l'acrylate de méthyle ou un dérivé d'acide méthacrylique choisi parmi l'acide méthacrylique, le méthacrylate de méthyle et le méthacrylate d'hydroxyéthyle.

7. Procédé de préparation des copolymères selon les revendications 1 à 6, caractérisé en ce que l'on polymérise 10 à 90 % en mol d'un dérivé d'acide dicarboxylique insaturé, 9 à 89 % en mol d'un éther alcénylique d'un oxyalkylèneglycol et 0,1 à 10 % en mol d'un composé vinylique de polyalkylèneglycol, de polysiloxane ou d'ester, à l'aide d'un amorceur radicalaire.

8. Procédé selon la revendication 7, caractérisé en ce que l'on utilise 40 à 55 % en mol d'un dérivé d'acide dicarboxylique insaturé, 40 à 55 % en mol d'un éther alcénylique d'un oxyalkylèneglycol et 1 à 5 % en mol d'un composé vinylique de polyalkylèneglycol, de polysiloxane ou d'ester.

9. Procédé selon la revendication 7 ou 8, caractérisé en ce que l'on copolymérise en outre jusqu'à 50 % en mol, en particulier jusqu'à 20 % en mol, par rapport aux monomères donnant les groupes constitutifs ayant les formules I, II et III, d'un dérivé vinylique choisi parmi le styrène, l'éthylène, le propylène, l'isobutène et l'acétate de vinyle, d'un dérivé d'acide acrylique choisi parmi l'acide acrylique et l'acrylate de méthyle ou d'un dérivé d'acide méthacrylique choisi parmi l'acide méthacrylique, le méthacrylate de méthyle et le méthacrylate d'hydroxyéthyle.

10. Procédé selon l'une des revendications 7 à 9, caractérisé en ce que l'on effectue la polymérisation en solution aqueuse à une température de 20 à 100°C.

11. Procédé selon la revendication 10, caractérisé en ce que la concentration des monomères dans la solution aqueuse est de 30 à 50 % en masse.

12. Procédé selon l'une des revendications 7 à 9, caractérisé en ce que l'on effectue la polymérisation sans solvant à l'aide d'un amorceur radicalaire à des températures de 20 à 150°C.

13. Utilisation des copolymères selon l'une des revendications 1 à 6 comme additifs pour des suspensions aqueuses à base de liants inorganiques, en particulier de ciment, de chaux ou de plâtre.